Europäisches Patentamt

European Patent Office

Office européen des brevets

(19)

(11) **EP 1 315 392 A1**

(12) ## DEMANDE DE BREVET EUROPEEN

(43) Date de publication:
**28.05.2003 Bulletin 2003/22**

(51) Int Cl.⁷: **H04Q 7/38**

(21) Numéro de dépôt: **02292911.1**

(22) Date de dépôt: **22.11.2002**

(84) Etats contractants désignés:
**AT BE BG CH CY CZ DE DK EE ES FI FR GB GR IE IT LI LU MC NL PT SE SK TR**
Etats d'extension désignés:
**AL LT LV MK RO SI**

(30) Priorité: **23.11.2001 FR 0115228**

(71) Demandeur: **EVOLIUM S.A.S.**
**75008 Paris (FR)**

(72) Inventeur: **Achard, Jacques**
**92130 Issy Les Moulineaux (FR)**

(74) Mandataire: **El Manouni, Josiane**
**Compagnie Financière Alcatel**
**Département de Propriété Industrielle,**
**5, rue Noel Pons**
**92734 Nanterre Cedex (FR)**

(54) **Procédé pour le changement de cellule dans un système cellulaire de radiocommunications mobiles en mode paquet**

(57)     Procédé pour le changement de cellule dans un système cellulaire de radiocommunications mobiles en mode paquet, procédé dans lequel des informations relatives à des ressources allouées à une station mobile dans une nouvelle cellule sont signalées par le réseau à cette station mobile alors que cette station mobile est encore dans une ancienne cellule, procédé dans lequel des informations destinées à permettre à la station mobile de déterminer une avance temporelle à appliquer par cette station mobile dans la nouvelle cellule sont en outre signalées par le réseau à cette station mobile alors que cette station mobile est encore dans l'ancienne cellule.

## FIG_1

**Description**

La présente invention concerne d'une manière générale les systèmes de radiocommunications mobiles.

D'une manière générale, dans ces systèmes, on distingue les services en mode circuit, qui ont plutôt été conçus pour du trafic sensible aux délais d'acheminement (tel que notamment la voix) mais dans lesquels l'utilisation de la bande passante n'est pas optimisée, et les services en mode paquet, qui ont plutôt été conçus pour du trafic peu sensible aux délais d'acheminement (tel que notamment le transfert de données) mais dans lesquels l'utilisation de la bande passante est mieux optimisée.

Un exemple de système de radiocommunications mobiles est le système GSM ("Global System for Mobile communications"), initialement développé principalement pour la téléphonie, et dans lequel a ensuite été introduite la fonctionnalité GPRS ("General Packet Radio Service") permettant d'offrir des services en mode paquet.

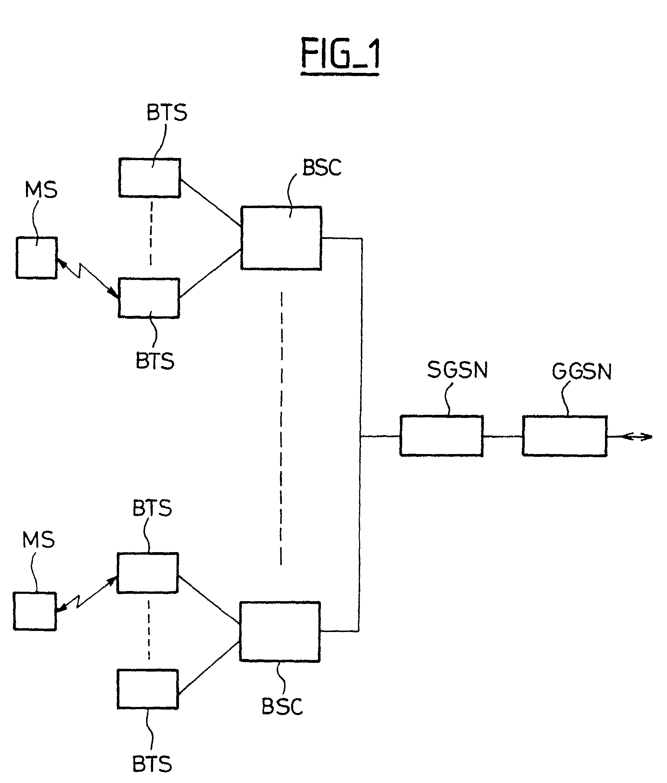

L'architecture des systèmes en mode paquet tels que par exemple les systèmes de type GSM/GPRS est rappelée sur la figure 1, elle comporte essentiellement

- des stations de base ou BTS (pour "Base Transceiver Station" en anglais), en relation avec des stations mobiles ou MS (pour « Mobile Station » en anglais), et des contrôleurs de stations de base ou BSC (pour "Base Station Controller" en anglais), l'ensemble formé par les BTS et BSC étant aussi appelé BSS (pour "Base Station Subsystem" en anglais), ou plus généralement réseau d'accès radio, ou RAN (pour « Radio Access Network »),

- des entités telles que les entités SGSN (pour "Serving GPRS Support Node" en anglais), en relation d'une part avec le BSS, et d'autre part avec des entités GGSN (pour « Gateway GPRS Support Node » en anglais), elles-mêmes en relation avec des réseaux extérieurs (non illustrés), l'ensemble formé par les SGSN et GGSN étant aussi appelé NSS, pour « Network Sub-System ») ou plus généralement réseau de coeur, ou CN, pour « Core Network ».

Le BSS recouvre des fonctionnalités communes aux services en mode circuit et aux services en mode paquet, et des fonctionnalités propres aux services en mode paquet ; ces dernières sont supportées par une entité particulière du BSS, appelée PCU (pour « Packet Control Unit » en anglais), non illustrée spécifiquement sur la figure 1.

Pour une description détaillée d'un tel système, on pourra notamment se référer aux spécifications correspondantes, publiées par les organismes de normalisation correspondants.

D'une manière générale, ces systèmes ont une architecture cellulaire, et des techniques sont prévues pour permettre de changer de cellule en cours de communication. On distingue habituellement les techniques dites de transfert intercellulaire (ou « handover ») utilisées dans le cas de mode circuit, et les techniques dites de resélection de cellule utilisées dans le cas de mode paquet. Brièvement, alors que les techniques de transfert intercellulaire ou « handover » nécessitent une réservation de ressources à l'avance dans la nouvelle cellule (ou cellule cible) avant de demander à la station mobile de se connecter à cette nouvelle cellule, les techniques de re-sélection de cellule ne nécessitent pas une telle réservation de ressources à l'avance, la station mobile effectuant une requête pour une telle réservation lorsqu'elle accède à la nouvelle cellule (ou cellule cible) re-sélectionnée.

On distingue généralement plusieurs modes de contrôle de resélection de cellule, correspondant à des degrés d'autonomie décroissants de la station mobile (ou, ce qui revient au même, à des degrés de contrôle croissants par le réseau).

Par exemple, dans le cas du système GSM/GPRS, comme spécifié dans les spécifications 3GPP TS 05.08 et 3G TS 04.60 publiées par le 3GPP (« 3rd Generation Partnership Project »):

- suivant un premier mode de contrôle (appelé aussi NC0), la station mobile décide de manière autonome d'effectuer un tel transfert et sélectionne elle-même la cellule cible vers laquelle la communication est à transférer, en tenant compte des résultats de mesures qu'elle effectue,

- suivant un deuxième mode de contrôle ( appelé aussi NC1), la station mobile décide de manière autonome d'effectuer un tel transfert et sélectionne elle-même la cellule cible vers laquelle la communication est à transférer, en tenant compte de résultats de mesures qu'elle effectue, et transmet par ailleurs les résultats de ces mesures au réseau,

- suivant un troisième mode de contrôle (appelé aussi NC2), le réseau décide d'effectuer un tel transfert et sélectionne la cellule cible vers laquelle la communication est à transférer, en tenant compte des résultats de mesures que lui transmet la station mobile.

Le mode de contrôle NC2 est aussi appelé resélection de cellule contrôlée par le réseau. Dans ce cas, une resélection de cellule est ordonnée par le réseau à la station mobile, dans un message appelé « Packet Cell Change Order» contenant l'identité de la cellule resélectionnée.

Les modes de contrôle NC0 et NC1 correspondent à un mode de resélection de cellule contrôlée par la station mobile. Dans ce cas la station mobile décide elle-même d'une resélection de cellule.

Par ailleurs, en mode paquet, une fois qu'une cellule cible a été déterminée par la station mobile, ou ordonnée par le réseau, suivant l'un ou l'autre de ces modes de contrôle, la station mobile doit effectuer un ensemble d'opérations nécessaires pour se connecter à cette cellule cible, commre décrit notamment dans la spécification 3GPP TS 44.060.

Une première opération consiste pour la station mobile à acquérir certaines informations système nécessaires, diffusées sur un canal commun dans la cellule cible.

Une deuxième opération consiste à mettre en oeuvre une procédure d'accès à la cellule cible.

Pour l'initialisation d'un transfert de données par une station mobile (ou établissement d'un TBF, pour « Temporary Block Flow », à l'initiative de la station mobile), il est possible d'utiliser l'une ou l'autre de deux méthodes dites respectivement d'accès en une seule phase ou d'accès en deux phases.

Brièvement, dans le cas de l'accès en une seule phase le réseau répond à une requête de la station mobile par un message indiquant directement à la station mobile les ressources allouées. Dans le cas de l'accès en deux phases, le réseau répond à une requête de la station mobile par un message indiquant à la station mobile une ressource limitée, qu'elle peut utiliser pour transmettre un message contenant une description plus précise de ses besoins, le réseau répondant alors par un message indiquant les ressources allouées.

En outre, dans l'une ou l'autre de ces méthodes, si la station mobile n'obtient pas de réponse du réseau dans un délai prédéterminé, elle peut renouveler sa demande.

Une troisième opération consiste pour la station mobile à obtenir une information dite d'avance temporelle (ou « timing advance »), à appliquer dans cette cellule cible aux signaux transmis par cette station mobile, relativement aux signaux reçus. On rappelle que dans un système, tel que notamment le système GSM/GPRS, mettant en oeuvre une technique d'accès multiple de type TDMA (« Time Division Multiple Access »), les signaux transmis sont structurés en trames comportant elles-mêmes différents intervalles de temps (ou « time-slots ») susceptibles d'être alloués à différents utilisateurs. L'application d'une avance temporelle à un signal transmis par une station mobile est alors destinée à compenser le temps de propagation de ce signal entre station mobile et station de base, et à faire en sorte que ce signal soit bien reçu à la station de base dans l'intervalle de temps alloué pour sa transmission, indépendamment de ce temps de propagation.

Généralement cette troisième opération comporte elle-même les étapes suivantes :

la station mobile envoie à la nouvelle station de base des signaux particuliers appelés « access bursts » ayant une durée suffisamment courte pour ne pas interférer avec des intervalles de temps voisins,

la nouvelle station de base évalue le temps de propagation de ces signaux, par comparaison de leur temps d'émission et de réception ;

la nouvelle station de base envoie à la station mobile le temps de propagation ainsi déterminé (ou avance temporelle à utiliser dans la nouvelle cellule), à utiliser dans la nouvelle cellule.

Une fois que la station mobile a reçu l'information d'avance temporelle à utiliser dans la nouvelle cellule, le transfert peut finalement être repris dans la nouvelle cellule. La valeur de l'avance temporelle peut ensuite être ajustée au cours de la transmission dans la cellule cible.

Il apparaît que de telles procédures sont relativement longues à mettre en oeuvre et sont donc susceptibles d'allonger de manière significative la durée d'interruption du transfert, due au changement de cellule. Bien que ceci soit acceptable pour certains types de trafic, pour lesquels le mode paquet a en fait initialement été conçu, un problème se pose, qui est dû au fait que le mode paquet est maintenant de plus en plus utilisé pour certains types de trafic pour lesquels les contraintes de délai, sans être aussi sévères que celles du mode circuit, sont néanmoins exigeantes. A titre d'exemple, les applications où le protocole de transport utilisé sur le réseau GPRS est du type TCP/IP (« Transmission Control Protocol/Internet Protocol ») voient leurs performances, en terme de débit, sensiblement dégradées par des interruptions de trafic relativement courtes (de l'ordre de la seconde). Pour de telles applications, un tel allongement de la durée d'interruption du transfert peut être considéré comme dégradant de manière inacceptable la qualité de service.

Une première solution a été proposée, consistant à introduire un mode dit de changement de cellule assisté par le réseau, ou NACC (pour « Network Assisted Cell Change »), tel que décrit notamment dans la spécification 3GPP TS 44.060. Une telle solution permet notamment à la station mobile d'acquérir plus rapidement les informations système nécessaires relatives à la cellule cible, en l'occurrence de les acquérir avant de quitter la cellule serveuse, le réseau transmettant ces informations à la station mobile dans un canal de signalisation dédié.

Une deuxième solution a été proposée, consistant à utiliser des principes similaires à ceux utilisés dans les techniques de « handover » mises en oeuvre dans le cas de services en mode circuit, à savoir une réservation de ressources dans la cellule cible alors que la station mobile est toujours dans la cellule serveuse. Les ressources allouées à la station mobile dans la cellule cible peuvent être communiquées à la station mobile, dans la cellule serveuse, dans un message tel que le message « Packet Cell Change Order » ou le message « Packet Time slot Reconfigure », tels que définis dans la spécification 3GPP TS 44.060. On pourra se référer aux documents suivants:

- EP 1059820
- WO00/79808
- 3GPP TSG GERAN WG2#6bis Aix-en-Provence, France Month 22nd - 26th , 2001, Tdoc GERAN G2 010387 Agenda item 7.2.5.6.

Cette deuxième solution permet de réduire la durée d'interruption du transfert plus efficacement que la première. Cependant, cette deuxième solution, telle que décrite dans ces différents documents, implique que la station mobile doive acquérir du réseau l'information d'avance temporelle relative à la cellule cible, selon la technique rappelée précédemment d'envoi d' « access bursts », avant de reprendre le transfert dans la cellule cible. Or une telle technique, avec ses différentes étapes rappelées ci-dessus (en liaison avec l'opération appelée troisième opération) allonge de manière significative la durée d'interruption du transfert. Le dernier de ces documents indique d'ailleurs que de ce fait, le temps d'interruption du transfert ne peut pas être réduit davantage.

La présente invention a notamment pour but d'éviter tout ou partie de ces inconvénients. Plus généralement, l'invention a pour but d'améliorer les performances de ces systèmes.

Un des buts de la présente invention est de réduire davantage ce temps d'interruption de transfert dû au changement de cellule, dans un système de radiocommunications mobiles en mode paquet.

Un des objets de la présente invention est un procédé pour le changement de cellule dans un système cellulaire de radiocommunications mobiles en mode paquet, procédé dans lequel des informations relatives à des ressources allouées à une station mobile dans une nouvelle cellule sont signalées par le réseau à cette station mobile alors que cette station mobile est encore dans une ancienne cellule, procédé dans lequel des informations destinées à permettre à la station mobile de déterminer une avance temporelle à appliquer par cette station mobile dans la nouvelle cellule sont en outre signalées par le réseau à cette station mobile alors que cette station mobile est encore dans l'ancienne cellule.

Un autre objet de l'invention est une station mobile pour système de radiocommunications mobiles en mode paquet, comportant :

- des moyens pour recevoir du réseau une information, transmise par une ancienne cellule, indiquant que la différence de temps réelle RTD entre l'ancienne cellule et une nouvelle cellule est égale à zéro,
- des moyens pour déterminer une valeur d'avance temporelle TA1 à utiliser dans la nouvelle cellule, à partir d'une mesure de différence de temps observée OTD entre la nouvelle cellule et l'ancienne cellule, et d'une valeur d'avance temporelle TA0 utilisée dans l'ancienne cellule, selon la relation TA1 = OTD + TA0.

Suivant une autre caractéristique, ladite information indiquant que la différence de temps réelle RTD entre l'ancienne et la nouvelle cellule est égale à zéro, est transmise dans un message allouant des ressources à la station mobile dans la nouvelle cellule.

Un autre objet de l'invention est une station mobile pour système de radiocommunications mobiles en mode paquet, comportant :

- des moyens pour recevoir du réseau une information RTD de différence de temps réelle entre une ancienne et une nouvelle cellule, transmise par l'ancienne cellule,
- des moyens pour déterminer une valeur d'avance temporelle TA1 à utiliser dans la nouvelle cellule, à partir d'une mesure de différence de temps observée OTD entre la nouvelle cellule et l'ancienne cellule, d'une valeur d'avance temporelle utilisée dans l'ancienne cellule TA0, et de ladite information de différence de temps réelle RTD transmise par l'ancienne cellule, selon la relation TA1 = OTD - RTD + TA0.

Suivant une autre caractéristique, ladite information RTD de différence de temps réelle entre l'ancienne et la nouvelle cellule est transmise dans un message allouant des ressources à la station mobile dans la nouvelle cellule.

Un autre objet de l'invention est une station mobile pour système de radiocommunications mobiles en mode paquet, comportant :

- des moyens pour recevoir du réseau une information d'avance temporelle TA1 à utiliser dans une nouvelle cellule, transmise par une ancienne cellule.

Suivant une autre caractéristique, ladite information d'avance temporelle TA1 à utiliser dans la nouvelle cellule est transmise dans un message allouant des ressources à la station mobile dans la nouvelle cellule.

Un autre objet de l'invention est un équipement de réseau cellulaire de radiocommunications mobiles en mode paquet, comportant :

- des moyens pour transmettre à une station mobile, par une ancienne cellule, une information destinée à indiquer que la différence de temps réelle RTD entre l'ancienne cellule et une nouvelle cellule est égale à zéro.

Suivant une autre caractéristique, ladite information destinée à indiquer que la différence de temps réelle RTD entre l'ancienne et la nouvelle cellule est égale à zéro est transmise dans un message allouant des ressources à la station mobile dans la nouvelle cellule.

Un autre objet de l'invention est un équipement de réseau cellulaire de radiocommunications mobiles en mode paquet, comportant :

- des moyens pour transmettre à une station mobile, par une ancienne cellule, une information de différence de temps réelle RTD entre l'ancienne cellule et une nouvelle cellule.

Suivant une autre caractéristique, ladite information de différence de temps réelle RTD entre l'ancienne cellule et la nouvelle cellule est transmise dans un message allouant des ressources à la station mobile dans la nouvelle cellule.

Un autre objet de l'invention est un équipement de réseau cellulaire de radiocommunications mobiles en mode paquet, comportant :

- des moyens pour transmettre à une station mobile, par une ancienne cellule, une information d'avance temporelle TA1 à utiliser dans une nouvelle cellule.

Suivant une autre caractéristique, ladite information d'avance temporelle à utiliser dans la nouvelle cellule est transmise dans un message allouant des ressources à la station mobile dans la nouvelle cellule.

Un autre objet de l'invention est une station mobile pour système cellulaire de radiocommunications mobiles en mode paquet, comportant :

- des moyens pour communiquer au réseau des informations destinées à permettre au réseau d'acquérir une information RTD de différence de temps réelle entre une ancienne et une nouvelle cellule.

Suivant une autre caractéristique, lesdites informations comportent une mesure de différence de temps observée OTD entre la nouvelle et l'ancienne cellule, et une valeur d'avance temporelle utilisée dans l'ancienne cellule, communiquées par la station mobile au réseau, par la nouvelle cellule.

Suivant une autre caractéristique, lesdites informations sont communiquées dans un premier message d'acquittement envoyé par la station mobile au réseau dans la nouvelle cellule.

Suivant une autre caractéristique, lesdites informations sont communiquées dans un message transmis dans un premier bloc montant envoyé par la station mobile au réseau dans la nouvelle cellule.

Suivant une autre caractéristique, lesdites informations sont communiquées dans un message de mise à jour de cellule envoyé par la station mobile au réseau dans la nouvelle cellule.

Un autre objet de l'invention est un équipement de réseau cellulaire de radiocommunications mobiles en mode paquet, comportant :

- des moyens pour recevoir d'une station mobile des informations destinées à permettre au réseau d'acquérir une information RTD de différence de temps réelle entre une ancienne et une nouvelle cellule.

Suivant une autre caractéristique, lesdites informations comportent une mesure de différence de temps observée OTD entre la nouvelle et l'ancienne cellule, et une valeur d'avance temporelle utilisée dans l'ancienne cellule, communiquées par la station mobile au réseau, par la nouvelle cellule.

Suivant une autre caractéristique, lesdites informations sont communiquées dans un premier message d'acquittement envoyé par la station mobile au réseau dans la nouvelle cellule.

Suivant une autre caractéristique, lesdites informations sont communiquées dans un message transmis dans un premier bloc montant envoyé par la station mobile au réseau dans la nouvelle cellule.

Suivant une autre caractéristique, lesdites informations sont communiquées dans un message de mise à jour de cellule envoyé par la station mobile au réseau dans la nouvelle cellule.

Un autre objet de la présente invention est un système cellulaire de radiocommunications mobiles en mode paquet, comportant au moins une station mobile suivant la présente invention.

Un autre objet de la présente invention est un système cellulaire de radiocommunications mobiles en mode paquet, comportant au moins un équipement de réseau suivant la présente invention.

D'autres objets et caractéristiques de la présente invention apparaîtront à la lecture de la description suivante d'exemples de réalisation, faite en relation avec les dessins ci-annexés dans lesquels:

- la figure 1 (décrite précédemment) est un schéma destiné à rappeler l'architecture générale d'un système cellulaire de radiocommunications mobiles de type GPRS,
- la figure 2 est un schéma destiné à illustrer le principe du handover synchronisé et du handover pseudo-synchronisé.

L'invention suggère, pour le cas du mode paquet, d'utiliser des principes similaires à ceux développés pour le mode circuit, au moyen des différentes techniques de « handover » : synchronisé, pré-synchronisé, ou pseudo-synchronisé, telles que définies notamment dans la spécification 3GPP TS 05.10.

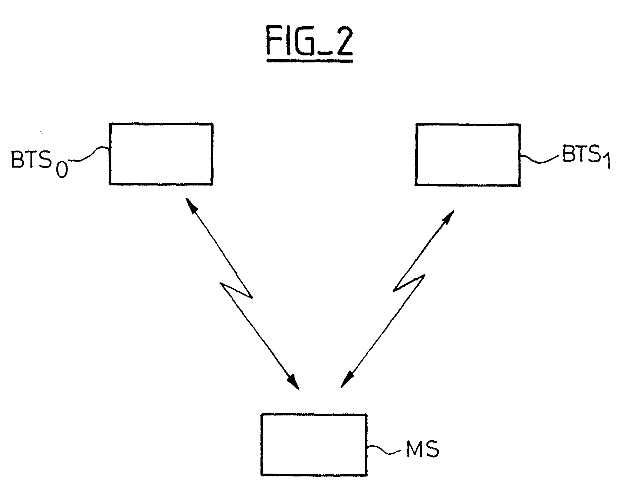

On rappelle tout d'abord brièvement les principes du handover pseudo-synchronisé, au moyen de la figure 2, illustrant une station mobile notée MS, et deux stations de base, dont l'une notée BTS0 correspond à une cellule serveuse, et dont l'autre notée BTS1 correspond à une cellule cible. Dans la présente demande on utilisera indifféremment, d'une part les termes nouvelle cellule ou nouvelle station de base, d'autre part les termes ancienne cellule ou ancienne station de base.

D'une manière générale, dans le cas où les stations de base ne sont pas synchronisées, il est nécessaire de tenir compte, non seulement d'une différence de temps de propagation entre l'ancienne et la nouvelle station de base, mais également d'un décalage de synchronisation entre ces deux stations de base.

Dans le cas le plus général, on peut écrire :

$$OTD = RTD + t1 - t0$$

où :

- OTD (pour « Observed Time Différence ») est une différence de temps observée par la station mobile MS écoutant simultanément les stations de base BTS0 et BTS1,
- RTD est la différence de temps réelle (ou « Real Time difference ») entre les stations de base BTS0 et BTS1, ou décalage de synchronisation entre ces stations de base,
- t0 est le temps de propagation entre MS et BTS0, et t1 est le temps de propagation entre MS et BTS1 (t1 -t0 étant la différence de temps de propagation pour ces deux stations de base).

Le principe du handover pseudo-synchronisé est basé sur le fait qu'une station mobile peut déterminer le temps de propagation t1 (et donc l'avance temporelle à appliquer dans la nouvelle cellule) à partir des valeurs de OTD et t0 connues de cette station mobile, et d'une valeur de RTD acquise par le réseau puis communiquée à la station mobile dans la cellule serveuse.

En outre, l'acquisition de RTD par le réseau peut être obtenue par exemple à partir des valeurs OTD et t0 communiquées par la station mobile à la nouvelle station de base BTS1 juste après un handover, et de la valeur t1 déterminée par la station de base BTS1 juste après ce handover. D'autres méthodes d'acquisition ou d'estimation de RTD sont bien entendu possibles.

Le cas de handover synchronisé correspond au cas particulier où les stations de base BTS0 et BTS1 sont synchronisées. Dans ce cas particulier, RTD est égal à zéro.

On rappelle également brièvement que le principe du handover pré-synchronisé est basé sur le fait que l'ancienne cellule peut avoir une connaissance a priori de l'avance temporelle TA1 à appliquer dans la nouvelle cellule, par exemple du fait d'une position géographique particulière de l'ancienne et de la nouvelle cellule. Par exemple lorsque l'ancienne cellule est une micro-cellule et la nouvelle cellule une macro-cellule parapluie correspondante, la station de base BTS0 peut fournir une bonne estimation de la valeur d'avance temporelle TA1 à utiliser dans la cellule cible. Une autre situation possible est un handover vers une micro-cellule où une valeur nulle de TA1 peut être utilisée pour commencer, du fait des faibles dimensions de la cellule.

L'invention suggère les différents modes de réalisation suivants :

- Pour un cas que l'on pourrait appeler « handover de TBF synchronisé » :

  RTD est égal à 0. La station mobile MS peut, à partir de TA0 (avance temporelle utilisée dans l'ancienne cellule) et de OTD qu'elle mesure, calculer l'information d'avance temporelle TA1 et l'utiliser immédiatement dans la nouvelle cellule.

L'information indiquant que le handover de TBF est synchronisé ou, ce qui est équivalent, que RTD est égal à zéro, peut être envoyée à la station mobile MS par la station de base BTS0 comme élément d'information optionnel dans un message allouant des ressources à la station mobile MS dans la nouvelle cellule, par exemple l'un ou l'autre des messages :

  PUA (« Packet Uplink Assignment »)
  PDA (« Packet Downlink Assignment »)
  PTR (« Packet Timeslot Reconfigure »)
  PCCO (« Packet Cell Change Order »).

Si l'élément d'information optionnel n'est pas inclus, alors le handover de TBF synchronisé n'est pas appliqué et dans ce cas la station mobile MS se comporte selon les procédures existantes. Si l'élément d'information est présent, la station mobile MS peut calculer TA1 et l'utiliser immédiatement dans la nouvelle cellule.

- Pour un cas que l'on pourrait appeler « handover de TBF pseudo-synchronisé » :

  RTD peut être envoyé à la station mobile MS par la station de base BTS0 comme élément d'information optionnel dans le message allouant les ressources à la station mobile MS dans la nouvelle cellule, par exemple l'un ou l'autre des messages:

    PUA (« Packet Uplink Assignment »)
    PDA (« Packet Downlink Assignment »)
    PTR (« Packet Timeslot Reconfigure »)
    PCCO (« Packet Cell Change Order »).

  Si l'élément d'information optionnel n'est pas inclus, alors le handover de TBF pseudo-synchronisé n'est pas appliqué et dans ce cas la station mobile MS se comporte selon les procédures existantes. Si l'élément d'information est présent, la station mobile MS peut calculer TA1 et l'utiliser immédiatement dans la nouvelle cellule.

  Par ailleurs, la station mobile MS peut communiquer OTD + TA0 à la station de base BTS1 par exemple dans le premier message d'acquittement « Packet Downlink Ack/Nack » (ou « PDAN ») envoyé à la station de base BTS1 dans le cas de transfert dans le sens descendant (ou « DL TBF »), et par exemple dans le premier bloc montant envoyé à la station de base BTS1 dans le cas de transfert dans le sens montant (ou « UL TBF ») (nouveau message à définir, par exemple modification du message « Packet Measurement Report » existant). Dans le cas du sens descendant, une autre solution n'utilisant pas le message « PDAN » est possible : puisque, même pour un transfert dans le sens descendant, la station mobile MS doit effectuer à un moment une mise à jour de cellule (ou « Cell update ») via un TBF montant dans la nouvelle cellule, OTD + TA0 pourrait être envoyé dans un bloc montant (ou « UL block ») (tel qu'un message « Packet Measurement Report » modifié) aussi dans ce cas.

- Pour un cas que l'on pourrait appeler « handover de TBF pré-synchronisé » :

TA1 peut être envoyé à la station mobile MS par la station de base BTS0 comme un élément d'information optionnel dans le message allouant des ressources à la station mobile MS pour la nouvelle cellule, par exemple l'un ou l'autre des messages suivants:

PUA (« Packet Uplink Assignment »)
PDA (« Packet Downlink Assignment »)
PTR (« Packet Timeslot Reconfigure »)
PCCO (« Packet Cell Change Order »).

Si l'élément d'information optionnel n'est pas inclus, alors le handover de TBF pré-synchronisé n'est pas appliqué, et dans ce cas la station mobile MS se comporte selon les procédures existantes.
Si l'élément d'information est présent, la station mobile MS peut utiliser TA1 immédiatement dans la nouvelle cellule.
Les avantages de la présente invention sont notamment :

- pour un TBF descendant (ou « DL TBF ») , la station mobile MS peut acquitter immédiatement les blocs descendants (ou « DL blocks ») qu'elle reçoit dans la nouvelle cellule ; il n'y a pas besoin que la station mobile MS envoie des « access burst » dans la nouvelle cellule, et pas besoin pour le réseau d'envoyer une information d'avance temporelle à la station mobile MS via un message « Packet Power control and Timing Advance » (ou « PPCTA »). Tout ceci résulte en un temps d'interruption plus court du trafic ;
- pour un TBF montant (ou « UL TBF »), la station mobile MS peut envoyer des blocs valides dans le sens montant aussitôt qu'on lui alloue des USF (« Uplink State Flag ») dans sa nouvelle allocation dans la nouvelle cellule. De nouveau, il n'y a pas besoin que la station mobile MS envoie des « access burst » dans la nouvelle cellule, et pas besoin pour le réseau d'envoyer une information d'avance temporelle à la station mobile MS via un message « Packet Power control and Timing Advance » (ou « PPCTA »). le gain d'ensemble dans le temps d'interruption du transfert est au moins d'un temps d'aller-retour (ou « Round Trip Delay ») entre MS et PCU (ou « Packet Control Unit»), ce qui peut atteindre par exemple 160 ms dans une architecture PCU distante (ou « remote PCU »).

La présente invention a également pour obet une station mobile, un équipement de réseau de radiocommunications mobiles, et un système de radiocommunications mobiles, tous comportant des moyens adaptés pour mettre en oeuvre un procédé suivant l'invention, suivant l'un ou l'autre des modes de réalisation ainsi décrits.
La réalisation particulière de tels moyens ne présentant pas de difficulté particulière pour l'homme du métier, de tels moyens ne nécessitent pas d'être décrits ici de manière plus détaillée que ce qui a été fait précédemment, par leur fonction.

**Revendications**

1. Procédé pour le changement de cellule dans un système cellulaire de radiocommunications mobiles en mode paquet, procédé dans lequel des informations relatives à des ressources allouées à une station mobile dans une nouvelle cellule sont signalées par le réseau à cette station mobile alors que cette station mobile est encore dans une ancienne cellule, procédé dans lequel des informations destinées à permettre à la station mobile de déterminer une avance temporelle à appliquer par cette station mobile dans la nouvelle cellule sont en outre signalées par le réseau à cette station mobile alors que cette station mobile est encore dans l'ancienne cellule.

2. Station mobile pour système cellulaire de radiocommunications mobiles en mode paquet, comportant :

- des moyens pour recevoir du réseau une information, transmise par une ancienne cellule, indiquant que la différence de temps réelle RTD entre l'ancienne cellule et une nouvelle cellule est égale à zéro,
- des moyens pour déterminer une valeur d'avance temporelle TA1 à utiliser dans la nouvelle cellule, à partir d'une mesure de différence de temps observée OTD entre la nouvelle cellule et l'ancienne cellule, et d'une valeur d'avance temporelle TA0 utilisée dans l'ancienne cellule, selon la relation TA1 = OTD + TA0.

3. Station mobile selon la revendication 2, dans laquelle ladite information indiquant que la différence de temps réelle RTD entre l'ancienne et la nouvelle cellule est égale à zéro est transmise dans un message allouant des ressources à la station mobile dans la nouvelle cellule.

4. Station mobile pour système cellulaire de radiocommunications mobiles en mode paquet, comportant :

   - des moyens pour recevoir du réseau une information RTD de différence de temps réelle entre une ancienne et une nouvelle cellule, transmise par l'ancienne cellule,
   - des moyens pour déterminer une valeur d'avance temporelle TA1 à utiliser dans la nouvelle cellule, à partir d'une mesure de différence de temps observée OTD entre la nouvelle cellule et l'ancienne cellule, d'une valeur d'avance temporelle utilisée dans l'ancienne cellule TA0, et de ladite information de différence de temps réelle RTD transmise par l'ancienne cellule, selon la relation TA1 = OTD - RTD + TA0.

5. Station mobile selon la revendication 4, dans laquelle ladite information RTD de différence de temps réelle entre l'ancienne et la nouvelle cellule est transmise dans un message allouant des ressources à la station mobile dans la nouvelle cellule.

6. Station mobile pour système cellulaire de radiocommunications mobiles en mode paquet, comportant :

   - des moyens pour recevoir du réseau une information d'avance temporelle TA1 à utiliser dans une nouvelle cellule, transmise par une ancienne cellule.

7. Station mobile selon la revendication 6, dans laquelle ladite information d'avance temporelle TA1 à utiliser dans la nouvelle cellule est transmise dans un message allouant des ressources à la station mobile dans la nouvelle cellule.

8. Equipement de réseau cellulaire de radiocommunications mobiles en mode paquet, comportant :

   - des moyens pour transmettre à une station mobile, par une ancienne cellule, une information destinée à indiquer que la différence de temps réelle RTD entre l'ancienne cellule et une nouvelle cellule est égale à zéro .

9. Equipement de réseau selon la revendication 8, dans lequel ladite information destinée à indiquer que la différence de temps réelle RTD entre l'ancienne et la nouvelle cellule est égale à zéro est transmise dans un message allouant des ressources à la station mobile dans la nouvelle cellule.

10. Equipement de réseau cellulaire de radiocommunications mobiles en mode paquet, comportant :

    - des moyens pour transmettre à une station mobile, par une ancienne cellule, une information de différence de temps réelle RTD entre l'ancienne cellule et une nouvelle cellule.

11. Equipement de réseau selon la revendication 10, dans lequel ladite information de différence de temps réelle RTD entre l'ancienne cellule et la nouvelle cellule est transmise dans un message allouant des ressources à la station mobile dans la nouvelle cellule.

12. Equipement de réseau cellulaire de radiocommunications mobiles en mode paquet, comportant :

    - des moyens pour transmettre à une station mobile, par une ancienne cellule, une information d'avance temporelle TA1 à utiliser dans une nouvelle cellule.

13. Equipement de réseau selon la revendication 12, dans lequel ladite information d'avance temporelle à utiliser dans la nouvelle cellule est transmise dans un message allouant des ressources à la station mobile dans la nouvelle cellule.

14. Station mobile pour système cellulaire de radiocommunications mobiles en mode paquet, comportant :

    - des moyens pour communiquer au réseau des informations destinées à permettre au réseau d'acquérir une information RTD de différence de temps réelle entre une ancienne et une nouvelle cellule.

15. Station mobile selon la revendication 14, dans laquelle lesdites informations comportent une mesure de différence de temps observée OTD entre la nouvelle et l'ancienne cellule, et une valeur d'avance temporelle utilisée dans l'ancienne cellule, communiquées par la station mobile au réseau, par la nouvelle cellule.

16. Station mobile selon l'une des revendications 14 ou 15, dans laquelle lesdites informations sont communiquées dans un premier message d'acquittement envoyé par la station mobile au réseau dans la nouvelle cellule.

**17.** Station mobile selon l'une des revendications 14 ou 15, dans laquelle lesdites informations sont communiquées dans un message transmis dans un premier bloc montant envoyé par la station mobile au réseau dans la nouvelle cellule.

**18.** Station mobile selon l'une des revendications 14 ou 15, dans laquelle lesdites informations sont communiquées dans un message de mise à jour de cellule envoyé par la station mobile au réseau dans la nouvelle cellule.

**19.** Equipement de réseau cellulaire de radiocommunications mobiles en mode paquet, comportant :

- des moyens pour recevoir d'une station mobile des informations destinées à permettre au réseau d'acquérir une information RTD de différence de temps réelle entre une ancienne et une nouvelle cellule.

**20.** Equipement de réseau selon la revendication 19, dans lequel lesdites informations comportent une mesure de différence de temps observée OTD entre la nouvelle et l'ancienne cellule, et une valeur d'avance temporelle utilisée dans l' ancienne cellule, communiquées par la station mobile au réseau, par la nouvelle cellule.

**21.** Equipement de réseau selon l'une des revendications 19 ou 20, dans lequel lesdites informations sont communiquées dans un premier message d'acquittement envoyé par la station mobile au réseau dans la nouvelle cellule.

**22.** Equipement de réseau selon l'une des revendications 19 ou 20, dans lequel lesdites informations sont communiquées dans un message transmis dans un premier bloc montant envoyé par la station mobile au réseau dans la nouvelle cellule.

**23.** Equipement de réseau selon l'une des revendications 19 ou 20, dans lequel lesdites informations sont communiquées dans un message de mise à jour de cellule envoyé par la station mobile au réseau dans la nouvelle cellule.

**24.** Système cellulaire de radiocommunications mobiles en mode paquet, comportant au moins une station mobile selon l'une des revendications 2, 3, 4, 5, 6, 7, 14, 15, 16, 17, 18.

**25.** Système cellulaire de radiocommunications mobiles en mode paquet, comportant au moins un équipement de réseau suivant l'une des revendications 8, 9, 10, 11, 12, 13, 19, 20, 21, 22, 23.

# FIG_1

# FIG_2

$BTS_0$

$BTS_1$

MS

**Office européen des brevets**

**RAPPORT DE RECHERCHE EUROPEENNE**

Numéro de la demande

EP 02 29 2911

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| D,X | EP 1 059 820 A (NOKIA) 13 décembre 2000 (2000-12-13) | 1,6,12 | H04Q7/38 |
| Y | * page 4, colonne 5, ligne 42 - page 9, colonne 15, ligne 30; figures * | 2,4,10, 14,15, 19,20, 24,25 | |
| Y | MOULY M ET AL: "THE PSEUDO-SYNCHRONISATION, A COSTLESS FEATURE TO OBTAIN THE GAINS OF A SYNCHRONISED CELLULAR NETWORK" MRC MOBILE RADIO CONFERENCE, XX, XX, novembre 1991 (1991-11), pages 51-55, XP000391318 * see complete article * | 2,4,10, 14,15, 19,20, 24,25 | |
| X | WO 01 47298 A (ERICSSON) 28 juin 2001 (2001-06-28) | 1 | |
| A | * page 5, ligne 19 - page 10, ligne 9; figures * | 2-25 | |
| A | EP 1 032 234 A (ALCATEL) 30 août 2000 (2000-08-30) * page 5, colonne 8, ligne 30 - page 8, colonne 13, ligne 7; figures * | 1-25 | **DOMAINES TECHNIQUES RECHERCHES (Int.Cl.7)** H04Q |
| A | FR 2 705 514 A (ALCATEL) 25 novembre 1994 (1994-11-25) * page 1, ligne 29 - page 20, ligne 30; figures * | 1-25 | |

Le présent rapport a été établi pour toutes les revendications

| Lieu de la recherche | Date d'achèvement de la recherche | Examinateur |
|---|---|---|
| LA HAYE | 18 février 2003 | Geoghegan, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

**ANNEXE AU RAPPORT DE RECHERCHE EUROPEENNE
RELATIF A LA DEMANDE DE BREVET EUROPEEN NO.**     EP 02 29 2911

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-02-2003

| Document brevet cité au rapport de recherche | | Date de publication | Membre(s) de la famille de brevet(s) | | Date de publication |
|---|---|---|---|---|---|
| EP 1059820 | A | 13-12-2000 | FI | 991333 A | 11-12-2000 |
| | | | CN | 1277525 A | 20-12-2000 |
| | | | EP | 1059820 A2 | 13-12-2000 |
| | | | JP | 2001036941 A | 09-02-2001 |
| WO 0147298 | A | 28-06-2001 | AU | 4712901 A | 03-07-2001 |
| | | | EP | 1240803 A2 | 18-09-2002 |
| | | | WO | 0147298 A2 | 28-06-2001 |
| EP 1032234 | A | 30-08-2000 | FR | 2695776 A1 | 18-03-1994 |
| | | | EP | 1032234 A1 | 30-08-2000 |
| | | | AT | 193795 T | 15-06-2000 |
| | | | AU | 4737793 A | 24-03-1994 |
| | | | CN | 1092228 A ,B | 14-09-1994 |
| | | | DE | 69328809 D1 | 13-07-2000 |
| | | | DE | 69328809 T2 | 11-01-2001 |
| | | | DK | 589753 T3 | 09-10-2000 |
| | | | EP | 0589753 A1 | 30-03-1994 |
| | | | ES | 2147193 T3 | 01-09-2000 |
| | | | FI | 934006 A | 16-03-1994 |
| | | | GR | 3033788 T3 | 31-10-2000 |
| | | | HK | 1007260 A1 | 19-01-2001 |
| | | | JP | 6205460 A | 22-07-1994 |
| | | | NO | 933254 A | 16-03-1994 |
| | | | NZ | 248564 A | 28-05-1996 |
| | | | PT | 589753 T | 30-11-2000 |
| | | | SG | 49019 A1 | 18-05-1998 |
| FR 2705514 | A | 25-11-1994 | FR | 2705514 A1 | 25-11-1994 |
| | | | AT | 161131 T | 15-12-1997 |
| | | | AU | 687061 B2 | 19-02-1998 |
| | | | AU | 6788594 A | 12-12-1994 |
| | | | CA | 2162707 A1 | 24-11-1994 |
| | | | CN | 1123074 A ,B | 22-05-1996 |
| | | | DE | 69407284 D1 | 22-01-1998 |
| | | | DE | 69407284 T2 | 20-05-1998 |
| | | | DK | 698318 T3 | 10-08-1998 |
| | | | EP | 0698318 A1 | 28-02-1996 |
| | | | ES | 2110754 T3 | 16-02-1998 |
| | | | FI | 955437 A | 13-11-1995 |
| | | | WO | 9427383 A1 | 24-11-1994 |
| | | | JP | 9504144 T | 22-04-1997 |
| | | | US | 5711003 A | 20-01-1998 |

EPO FORM P0460

Pour tout renseignement concernant cette annexe : voir Journal Officiel de l'Office européen des brevets, No.12/82